(19) Europäisches Patentamt
European Patent Office
Office européen des brevets

(11) Numéro de publication: **0 072 757**
**B1**

(12) # FASCICULE DE BREVET EUROPEEN

(45) Date de publication du fascicule du brevet: **06.11.85**

(51) Int. Cl.⁴: **C 07 D 501/18**, C 07 F 9/65

(21) Numéro de dépôt: **82401533.3**

(22) Date de dépôt: **13.08.82**

(54) **Nouveaux dérivés de la céphalosporine et leur préparation.**

(30) Priorité: **17.08.81 FR 8115806**

(43) Date de publication de la demande: **23.02.83 Bulletin 83/8**

(45) Mention de la délivrance du brevet: **06.11.85 Bulletin 85/45**

(84) Etats contractants désignés: **AT BE CH DE FR GB IT LI LU NL SE**

(56) Documents cités:
**BE - A - 883 416**
**FR - A - 2 212 137**
**FR - A - 2 457 296**

**Le dossier contient des informations techniques présentées postérieurement au dépôt de la demande et ne figurant pas dans le présent fascicule.**

(73) Titulaire: **RHONE-POULENC SANTE, Les Miroirs 18 Avenue d'Alsace, F-92400 Courbevoie Cedex (FR)**

(72) Inventeur: **Farge, Daniel, 30 rue des Pins Sylvestres, F-94320 Thiais (FR)**
Inventeur: **Le Roy, Pierre, 2 Allée des Cerisiers, F-94320 Thiais (FR)**
Inventeur: **Moutonnier, Claude, 3 rue Auguste Rodin, F-92350 Le Plessis-Robinson (FR)**
Inventeur: **Peyronel, Jean-François, 36 parc d'Ardenay, F-91120 Palaiseau (FR)**

(74) Mandataire: **Gaumont, Robert et al, RHONE-POULENC RECHERCHES Service Brevets Pharma 25, Quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 072 757 B1

**Description**

La présente invention concerne de nouveaux dérivés d'aminovinyl-3 céphalosporines de formule générale:

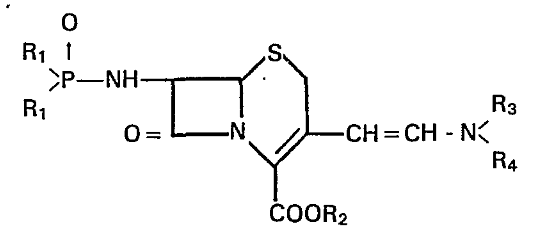 (I)

et leur préparation.

Dans le brevet belge 883 416 ont été décrits des dérivés d'aminovinyl-3 céphalosporines diversement substitués qui sont utiles comme intermédiaires pour la synthèse de céphalosporines pharmaceutiquement actives.

Dans la formule générale (I), le substituant sur l'atome de carbone en position -3 du bicyclooctène présente la stéréoisomérie trans, les symboles $R_1$ représentent des radicaux phényle ou des radicaux $-OZ_1$ dans lesquels $Z_1$ est alcoyle, trichloro-2,2,2 éthyle, phényle ou benzyle, les radicaux phényle et benzyle pouvant être eux-mêmes substitués par un atome d'halogène ou par un radical alcoyle, alcoyloxy ou nitro, ou bien les radicaux $Z_1$ des 2 substituants $R_1$ forment ensemble un radical alcoylène contenant 2 ou 3 atomes de carbone, le symbole $R_2$ représente un radical facilement éliminable par voie enzymatique de formule générale:

$$-\underset{\displaystyle R_5}{\underset{|}{CH}} - OCO\ R_6 \qquad (II)$$

(dans laquelle $R_5$ représente un atome d'hydrogène ou un radical alcoyle et $R_6$ représente un radical alcoyle ou cyclohexyle), ou un radical protecteur, par exemple méthoxyméthyle, t.alcoyle contenant 4 à 6 atomes de carbone (par exemple t.butyle), t.alcényle contenant 6 ou 7 atomes de carbone, t.alcynyle contenant 6 ou 7 atomes de carbone, benzhydryle, benzyle, p.nitrobenzyle, p.méthoxybenzyle ou trichloro-2,2,2 éthyle et les symboles $R_3$ et $R_4$, qui sont identiques ou différents, représentent des radicaux alcoyle (éventuellement substitués par un radical alcoyloxy ou dialcoylamino) ou phényle ou forment ensemble avec l'atome d'azote auquel ils sont rattachés un hétérocycle saturé à ou 6 chaînons contenant éventuellement un autre hétéroatome choisi parmi l'azote, l'oxygène ou le soufre et éventuellement substitué par un radical alcoyle, étant entendu que les portions ou radicaux alcoyles cités ci-dessus (ou qui seront cités ci-après) sont (sauf mention spéciale) droits ou ramifiés et contiennent 1 à 4 atomes de carbone.

Dans ce qui suit, la stéréoisomérie trans sera désignée par E et la stéréoisomérie cis sera désignée par Z.

Parmi les significations du groupement $-NR_3R_4$ on préfère notamment les radicaux diméthylamino et pipéridino.

1/ - Selon l'invention, les produits de formule générale (I) pour lesquels $R_3$ et $R_4$ ont les définitions données précédemment peuvent être obtenus par action d'un produit, éventuellement préparé in situ, de formule générale:

$$\begin{matrix} R_7 \\ R'_7 \end{matrix}\!\!>CH - N\!\!<\!\!\begin{matrix} R_3 \\ R_4 \end{matrix} \qquad (III)$$

[dans laquelle $R_3$ et $R_4$ sont définis comme précédemment et $R_7$ et $R'_7$, qui sont identiques ou différents, représentent soit des groupements de formule générale:

$$- X_2\ R_8 \qquad (IV)$$

dans laquelle $X_2$ est un atome d'oxygène et $R_8$ représente un radical alcoyle ou phényle,
soit représentent l'un un radical de formule générale (IV) (dans laquelle $X_2$ est oxygène ou soufre) et l'autre un radical amino de formule générale:

$$- N\!\!<\!\!\begin{matrix} R_9 \\ R_{10} \end{matrix} \qquad (V)$$

dans laquelle $R_9$ et $R_{10}$ sont définis comme $R_3$ et $R_4$ dans la formule générale (III), soit encore représentent chacun un radical de formule générale (V)], sur un dérivé de céphalosporine de formule générale:

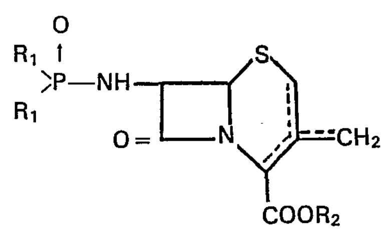 (VI)

dans laquelle $R_1$ et $R_2$ sont définis comme précédemment et qui se présente sous forme méthyl-3 bicyclooctène-2 ou -3 ou méthylène-3 bicyclooctane.

On opère généralement dans un solvant organique tel qu'un amide (par exemple le diméthylformamide, le diméthylacétamide ou l'hexaméthylphosphorotriamide), un nitrile (par exemple l'acétonitrile), un ester (par exemple l'acétate d'éthyle), un éther (par exemple le dioxanne) ou un solvant chloré (par exemple le dichloro-1,2 éthane) ou encore dans un mélange de tels solvants à une température comprise entre 20°C et la température de reflux du mélange réactionnel.

Lorsque l'on choisit un produit de formule générale (III) dans laquelle le radical (V) est différent de $-NR_3R_4$, il est préférable de choisir un tel produit de manière que l'amine $HN\ R_9R_{10}$ soit plus volatile que $HN\ R_3R_4$.

Les produits de formule générale (III) peuvent être préparés selon les méthodes décrites par H. BREDERECK et coll., Chem. Ber. 101, 41 (1968), Chem. Ber. 101, 3058 (1968) et Chem. Ber. 106, 3725 (1973).

Les dérivés de la céphalosporine de formule générale (VI) peuvent être préparés par application de la méthode décrite par A. MORIMOTO et coll., J.C.S.

Perkin I, 1109 (1980) à partir d'un halogénure de formule générale:

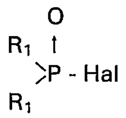

(VII)

dans laquelle $R_1$ est défini comme précédemment et Hal représente un atome d'halogène,
et d'une amino-7 céphalosporine de formule générale:

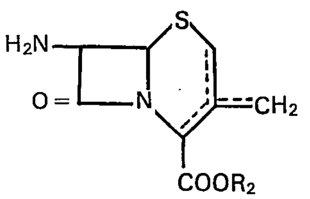

(VIII)

dans laquelle $R_2$ est défini comme précédemment ou par l'une des méthodes citées ci-après dans les exemples.

L'halogénure de formule générale (VII) peut être préparé selon l'une des méthodes décrites par K. SASSE, Methoden der Organischen Chemie, Vol. 12 part 2, page 274, Houben Weyl, Georg Thieme Verlag, Stuttgart (1964).

Les amino-7 céphalosporines de formule générale (VIII) peuvent être obtenues comme décrit dans le brevet belge 883 416.

Les nouveaux produits de formule générale (I) sont utiles comme intermédiaires pour la préparation des thiovinyl-3 céphalosporines décrites dans le brevet belge 883 416, qui répondent à la formule générale:

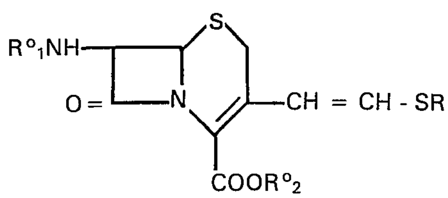

(IX)

dans laquelle:

α) le symbole R est choisi parmi les significations suivantes:

1) alcoyle, L-amino-2 carboxy-2 éthyle, phényle
2) pyridyle-2, pyridyle-3 ou pyridyle-4 éventuellement N-oxidés,
3) pyrimidinyle-2, pyridazinyle-3 substitué en position -6 (par un radical alcoyle, méthoxy, amino ou acylamino) et éventuellement N-oxydé ou tétrazolo[4,5-b] pyridazinyle-6
4) dioxo-5,6 tétrahydro-1,4,5,6 triazine-1,2,4 yle-3 substitué en position -4, triazol-1,3,4 yle-5 ou alcoyloxycarbonyl-2 triazol-1,3,4 yle-5 substitués en position -1

a) par un radical alcoyle contenant 1 à 4 atomes de carbone non substitué ou substitué par un radical alcoyloxy, alcoylthio, phényle, formyle, carbamoyle, alcoylcarbamoyle, dialcoylcarbamoyle, acyle, alcoyloxycarbonyle ou thiazolidinyle-2,

b) par un radical allyle, dihydroxy-2,3 propyle, dihydroxy-1,3 propyle-2, formyl-2 hydroxy-2 éthyle, formyloxy-3 hydroxy-2 propyle, bis-formyloxy-2,3 propyle ou bis-formyloxy-1,3 propyle-2,

c) par un radical alcoyle contenant 2 à 4 atomes de carbone, substitué par hydxroxy, carbamoyloxy, acyloxy (dont la partie acyle peut être substituée par un radical amino, alcoylamino ou dialcoylamino), alcoylsulfinyle, alcoylsulfonyle, amino, alcoylamino, dialcoylamino, sulfoamino, alcoylsulfonylamino, sulfamoylamino, acylamino (dont la partie acyle est éventuellement substituée par hydroxy, amino, alcoylamino ou dialcoylamino), alcoyloxycarbonylamino, uréido, alcoyluréido, dialcoyluréido,

d) par un radical répondant à l'une des formules générales:

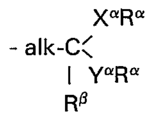

ou

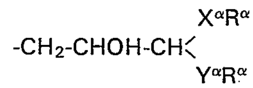

(Xa) (Xb)

dans laquelle alk représente un radical alcoylène contenant 1 à 4 atomes de carbone, $X^\alpha$ et $Y^\alpha$ sont identiques et représentent des atomes d'oxygène ou de soufre et $R^\alpha$ représente un radical alcoyle, ou bien $X^\alpha$ et $Y^\alpha$ sont identiques ou différents et représentent des atomes d'oxygène ou de soufre et les radicaux $R^\alpha$ forment ensemble un radical alcoylène contenant 2 ou 3 atomes de carbone, et $R^\beta$ représente un atome d'hydrogène ou un radical alcolyle contenant 1 à 3 atomes de carbone,

e) par un radical alcoyle contenant 2 à 5 atomes de ccarbone substitué par unradical alcoyloxyimino ou hydroxyimino.

5) dialcoyl-1,4 dioxo-5,6 tétrahydro-1,4,5,6 triazine-1,2,4 yle-3, alcoyl-1 dioxo-5,6 tétrahydro-1,4,5,6 triazine-1,2,4 yle-3 ou alcoyl-2 dioxo-5,6 tétrahydro-1,2,5,6 triazine-1,2,4 yle-3
6) triazol-1,3,4 yle-5, triazol-1,2,3 yle-5 ou alcoyl-1 triazol-1,2,4 yle-5 non substitué ou substitué en position -3 par alcoyloxycarbonyle
7) a) thiadiazol-1,3,4 yle-5 non substitué ou substitué par un radical alcoyle, trifluorométhyle, alcoyloxy, alcoylthio, hydroxyalcoylthio dont la partie alcoyle contient 2 à 4 atomes de carbone, alcoylsulfonyle, hydroxy, hydroxyalcoyle, carboxy, carboxyalcoyle, amino, alcoylamino, dialcoylamino, aminoalcoyle, alcoylaminoalcoyle, dialcoylaminoalcoyle, acylamino ou acylaminoalcoyle,

b) thiadiazol-1,2,4 yle-5 substitué par un radical alcoyle ou alcoyloxy,

8) a) oxadiazol-1,3,4 yle-5 non substitué ou substitué par un radical alcoyle, trifluorométhyle, phényle, aminoalcoyle, alcoylaminoalcoyle, dialcoylaminoalcoyle ou acylaminoalcoyle

b) oxazolyle-2 ou alcoyl-4 oxazolyle-2

9) tétrazolyle-5 non substitué ou substitué en position -1 par

a) un radical alcoyle contenant 1 à 4 atomes de carbone non substitué ou substitué par alcoyloxy, sulfo, carboxy, formyle ou sulfamoyle,

b) un radical alcoyle contenant 2 à 4 atomes de carbone substitué par hydroxy, amino, alcoylamino, dialcoylamino, acylamino, carboxyalcoylamino, sulfamoylamino, sulfoamino, uréido, alcoyluréido ou dialcoyluréido,

c) un radical alcoyle contenant 2 à 5 atomes de carbone substitué par hydroxyimino ou alcoyloxyimino,

d) un radical phényle, dihydroxy-2,3 propyle, dihydroxy-1,3 propyle-2, formyl-2 hydroxy-2 éthyle, formyloxy-3 hydroxy-2 propyle, bis-formyloxy-2,3 propyle ou bis-formyloxy-1,3 propyle-2,

e) un radical de formule générale (Xa) pour lequel $R^{\beta}$ représente un atome d'hydrogène, ou un radical de formule générale (Xb), le symbole $R°_1$ représente un radical de formule générale:

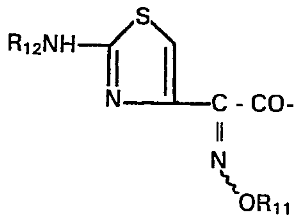

(XI)

dans laquelle $R_{11}$ est hydrogène, alcoyle, vinyle ou cyanométhyle et $R_{12}$ représente un atome d'hydrogène, et le symbole $R°_2$ représente un atome d'hydrogène ou un radical de formule générale (II), ou bien $\beta$) le symbole R représente un radical alcoyle ou phényle,
le symbole $R°_1$ représente

1°/ un radical alcanoyle contenant 1 à 8 atomes de carbone, alcanoyle contenant 2 à 8 atomes de carbone substitué par des atomes de chlore ou de brome, un radical acyle de formule générale:

$$Ar - \underset{Q}{\overset{Q}{C}} - CO - \quad (XII)$$

{dans laquelle chaque Q est H ou méthyle et Ar représente un radical thiényle-2, thiényle-3, furyle-2, furyle-3, pyrrolyle-2, pyrrolyle-3 ou phényle [éventuellement substitué par des atomes d'halogène ou des radicaux hydroxy, alcoyle (contenant 1 à 3 atomes de carbone) ou alcoyloxy (contenant 1 à 3 atomes de carbone) dont au moins l'un est situé en méta ou en para du phényle]},
un radical acyle de formule générale:

$$Ar - X_1 - CH_2 - CO - \quad (XIII)$$

{dans laquelle $X_1$ est l'oxygène ou le soufre et Ar est défini comme ci-dessus ou $Ar\text{-}X_1\text{-}$ représente pyridyl-4 thio},
un radical acyle répondant à la formule générale:

$$Ar - \underset{B}{CH} - CO - \quad (XIV)$$

{dans laquelle Ar est défini comme précédemment et B représente un radical amino protégé [par un groupement benzyloxycarbonyle, alcoyloxycarbonyle, cy-clopentyloxycarbonyle, cyclohexyloxycarboonyle, benzhydryloxycarbonyle, trityle ou trichloro-2,2,2 éthoxycarbonyle], un radical sulfo, un radical hydroxy ou carboxy [éventuellement protégés par estérification respectivement avec un acide alcanoïque ou un alcool (contenant 1 à 6 atomes de carbone)]}, ou bien un radical amino-5 adipoyle {dans lequel le groupement amino est éventuellement protégé par un radical alcanoyle (contenant 1 à 3 atomes de carbone et éventuellement substitué par un atome de chlore) et dans lequel le groupe carboxy est protégé par un groupe benzhydryle, trichloro-2,2,2 éthyle, t.alcoyle (contenant 4 à 6 atomes de carbone) ou nitrobenzyle} ou bien $R°_1NH$- est remplacé par un groupement imide cyclique d'un acide dicarboxylique ou

2°/ $R°_1$ représente un radical azidoacétyle, cyanoacétyle ou un radical de formule générale (XII) dans laquelle Ar est phényle substitué [par des radicaux trifluorométhyle, cyano ou nitro dont au moins l'un est situé en méta ou en para] ou un radical de formule générale (XIV) [dans laquelle Ar est défini comme précédemment et B est amino, azido, cyano ou carbamoyle] ou un radical (sydnone-3)-2 alcanoyle (dont la partie alcanoyle contient 1 à 3 atomes de carbone) ou un radical de formule générale:

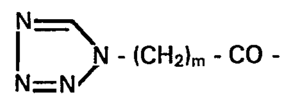

(XV)

dans laquelle m est 0 à 2, et
le symbole $R°_2$ est un radical protecteur tel que défini pour $R_2$ ou représente un atome d'hydrogène.

Il est entendu que, dans les produits de formule générale (IX), le substituant en position -3 du bicyclooctène présente la stéréoisomérie E ou Z et que, lorsque $R°_1$ est un radical de formule générale (XI), celui-ci peut se présenter sous les formes syn ou anti. Les produits de formule générale (IX) existent également à l'état de mélanges de ces formes isomères.

Il est également entendu que les portions ou radicaux alcoyles ou acyles sont (sauf mention spéciale) droits ou ramifiés et contiennent 1 à 4 atomes de carbone.

Les produits de formule générale (IX) peuvent être obtenus à partir des produits de formule générale (I) en opérant comme suit:

Les produits de formule générale:

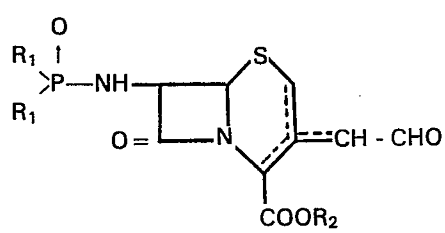

(XVIa)

dans laquelle $R_1$ et $R_2$ sont définis comme précédemment, et qui se présentent sous forme (oxo-2 éthyl)-3 bicyclooctène-2 ou -3 ou oxoéthylidène-3 bicyclocotane, sont préparés par hydrolyse en milieu acide de l'énamine de formule générale (I) ou du mélange de ses isomères.

On opère généralement dans un acide organique (par exemple acide formique, acide acétique) ou minéral (par exemple acide chlorhydrique, acide sulfurique) en présence ou non d'un solvant, en milieu aqueux ou organique, à une température comprise

entre —20 °C et la température de reflux du mélange réactionnel, puis traite éventuellement par une base minérale (bicarbonate alcalin) ou organique (amine tertiaire ou pyridine).

Lorsque l'on opère en milieu organique, l'hydrolyse est réalisée par addition d'eau au mélange réactionnel.

Lorsque l'on opère en présence d'un solvant, il n'est pas nécessaire que le solvent soit miscible à la phase aqueuse acide. Le contact est alors réalisé par agitation vive.

Parmi les solvants utilisables peuvent être cités les solvants chlorés, l'acétate d'éthyle, le tétrahydrofuranne, l'acétonitrile, le diméthylformamide, les alcools.

Les produits de formule générale:

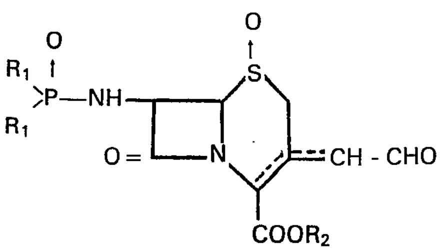

(XVIb)

dans laquelle $R_1$ et $R_2$ sont définis comme précédemment et qui se présentent sous forme (oxo-2 éthyl)-3 bicyclooctène-2 ou oxoéthylidène-3 bicyclooctane peuvent être obtenus par oxydation des produits de formule générale (XVIa) par application de la méthopde décrite dans la demande de brevet allemand DE 2 637 176.

Les produits de formule générale:

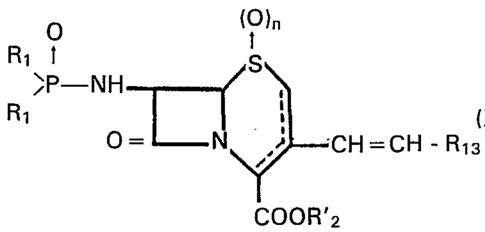

(XVII)

[dans laquelle $R_1$ est défini comme précedemment et $R'_2$ a la définition correspondante de $R_2$ ou représente l'hydrogène,
étant entendu que lorsque n = 0 le produit se présente sous forme bicyclooctène-2 ou -3 et lorsque n = 1 le produit se présente sous forme bicyclooctène-2, le substituant sur l'atome de carbone en position -3 du bicyclooctène présente la stéréoisomérie E ou Z et le symbole $R_{13}$ représente un atome d'halogène ou un radical de formule générale:

$R'_{13}$ - $SO_2$ O - (XVIIIa)

ou $R''_{13}$ - COO - (XVIIIb)

(dans lesquelles $R'_{13}$ représente un radical alcoyle, trifluorométhyle, trichlorométhyle ou un radical phényle non substitué ou substitué par un atome d'halogène ou par un radical alcoyle ou nitro et $R''_{13}$ est défini comme $R_{13}$ ou représente un radical acylméthyle, acyl-2 éthyle, acyl-2 propyle, alcoyloxycarbonylméthyle, alcoyloxycarbonyl-2 éthyle ou alcoyloxycarbonyl-2 propyle)], sont alors préparés par action d'un agent d'halogénation ou d'une forme activée d'un acide $R'_{13}SO_3H$ ou $R''_{13}COOH$, de formules générales:

$(R'_{13}\ SO_2)_2\ O$ (XIXa)

$R'_{13}\ SO_2\ Hal$ (XIXb)

$(R''_{13}\ CO)_2\ O$ (XIXc)

$R''_{13}\ CO\ Hal$ (XIXd)

[dans ces formules $R'_{13}$ et $R''_{13}$ sont définis comme précédemment et Hal représente un atome d'halogène] sur un produit de formule générale (XVIa) ou (XVIb) ou sur un mélange de ses isomères, suivie éventuellement de la réduction du sulfoxyde obtenu et, le cas échéant, de l'élimination du groupement protecteur de la fonction acide lorsque l'on veut obtenir un produit de formule générale (XVII) pour lequel la fonction acide est libre.

On opère généralement en présence d'une base tertiaire du type

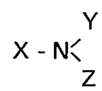

(XX)

où X, Y et Z représentent des radicaux alcoyle ou phényle ou éventuellement deux d'entre eux forment un cycle avec l'atome d'azote auquel ils sont rattachés (par exemple en présence de triéthylamine ou de NN-diméthylaniline), dans un solvant organique chloré (par exemple chlorure de méthylène), dans un ester (par exemple acétate d'éthyle), dans un éther (par exemple dioxanne, tétrahydrofuranne), dans un amide (par exemple diméthylacétamide, diméthylformamide ou hexaméthylphosphorotriamide), dans l'acétonitrile ou la N-méthylpyrrolidone ou dans un mélange de tels solvants ou directement dans un solvant basique comme la pyridine, ou bien lorsque $R_{13}$ est autre qu'un atome d'halogène on opère en milieu hydroorganique en présence d'un agent alcalin de condensation (bicarbonate alcalin, soude ou potasse par exemple) à une température comprise entre —78 °C et la température de reflux du mélange réactionnel.

Eventuellement la réaction est mise en œuvre sous azote.

Lorsque l'on veut préparer un produit de formule générale (XVII) dans laquelle $R_{13}$ est un atome d'halogène, les agents d'halogénation peuvent être choisis parmi des dérivés halogénés du phosphore, notamment les

— composés d'addition d'halogène et de triarylphosphite, ou bien
— le trichlorure de phosphore, l'oxychlorure de phosphore, le pentachlorure de phosphore, le dichlorotriphénylphosphorane ou le catéchyltrichlorophosphorane lorsque $R^{13}$ est un atome de chlore, ou
— le tribromure de phosphore, l'oxybromure de phosphore, le pentabromure de phosphore ou le catéchyltribromophosphorane lorsque $R_{13}$ est un atome de brome.

Lorsque l'on utilise le trichlorure (ou le tribromure) de phosphore, on fait agir ce réactif sur un produit de formule générale (XVIa).

Le catéchyltrichloro (ou tribromo) phosphorane, qui peut être préparé in situ, peut être obtenu selon la méthode décrite par H. GROSS et U. KARSCH, J. Prak. Chem., 29, 315 (1965).

Les composés d'addition d'halogène et de triarylphosphite, qui peuvent être formés in situ, sont décrits par H.N. RYDON et B.L. TONGE, J. Chem. Soc., 3043 (1956), par J. MICHALSKI et coll., J. Org. Chem., 45, 3122 (1980) ou dans le brevet belge 881 424 et peuvent être préparés selon les méthodes mentionnées dans ces documents.

La préparation des dérivés halogénés de formule générale (XVII) s'effectue en milieu anhydre.

La réduction du S-oxyde peut être effectuée dans les conditions décrites dans la demande de brevet allemand 2 637 176.

L'élimination des groupements protecteurs du radical carboxy s'effectue, à titre d'exemple

— lorsqu'il s'agit d'un groupement t.butyle, p.méthoxybenzyle ou benzhydryle: par traitement en milieu acide.

De préférence on utilise l'acide trifluoracétique en opérant à une température comprise entre 0 et 20°C ou bien on utilise l'acide formique anhydre ou aqueux, l'acide orthophosphorique ou polyphosphorique ou encore l'acide paratoluènesulfonique ou méthylsulfonique dans l'acétone ou l'acétonitrile à une température comprise entre 20°C et la température de reflux du mélange réactionnel.

Dans le cas du radical benzhydryle, on peut opérer en présence d'anisole

— lorsqu'il s'agit d'un groupement méthoxyméthyle: par traitement en milieu acide dilué

— lorsqu'il s'agit d'un groupement p.nitrobenzyle: par réduction (notamment traitement par le zinc dans l'acide acétique ou hydrogénolyse).

Les produits de formule générale (XVII) peuvent ensuite être traités selon l'une ou l'autre des méthodes suivantes, pour préparer les thiovinyl-3 céphalosporines de formule générale (IX):

A/ On prépare une amino-7 céphalosdporine de formule générale:

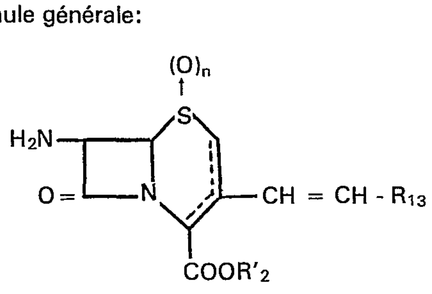

(XXI)

[dans laquelle n, $R'_2$ et $R_{13}$ sont définis comme précédemment et la position de la double liaison ainsi que la configuration du substituant en position -3 sont définis comme pour la formule générale (XVII)] par élimination du radical $(R_1)_2P(O)$-, ou éventuellement élimination simultanée des radicaux protecteurs $(R_1)_2P(O)$- et $R'_2$ d'un produit de formule générale (XVII).

L'élimination du radical $(R_1)_2P(O)$- s'effectue par toute méthode connue pour le déblocage des groupements protecteurs phosphoryles, par exemple selon le brevet belge 833 619, selon la méthode décrite par P. HAAKE et coll., J. Am. Chem. Soc. 95, 8073 (1973) lorsque $(R_1)_2P(O)$- est un radical diphénylphosphinoyle ou encore par réduction (notamment par le zinc dans l'acide acétique) lorsque $R_1$ est un radical trichloro-2,2,2 éthoxy ou p.nitrobenzyloxy.

Les produits de formule générale (IX) peuvent alors être préparés selon les méthodes décrites dans le brevet belge 883 416.

B/ On fait agir un thiol de formule générale:

R - SH (XXII)

(ou un de ses sels alcalins ou alcalino-terreux) [dans laquelle R, qui est défini comme en $\alpha$) ou $\beta$) dans la formule générale (IX), est éventuellement protégé], sur un dérivé de céphalosporine de formule générale (XVII) (ou un mélange de ses isomères), puis éventuellement on réduit le sulfoxyde obtenu et élimine éventuellement les radicaux protecteurs, pour préparer un produit de formule générale:

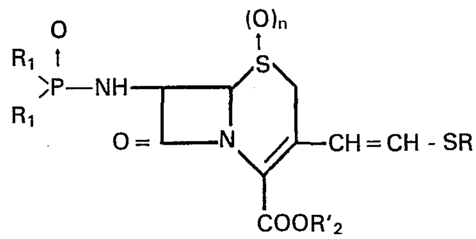

(XXIII)

dans laquelle n et $R'_2$ sont définis comme précédemment, et R est défini comme ci-dessus.

Lorsque l'on veut obtenir un produit de formule générale (XXIII) dans laquelle R contient un radical formyle ou acylalcoyle, on met en œuvre un thiol de formule générale (XXII) dans laquelle R est protégé à l'état d'acétal [tel que défini par les formules générales (Xa) et (Xb)].

Il est entendu que, lorsque le radical R du produit de formule générale (XXII) est susceptible d'interférer avec la réaction, il est préférable de protéger ce groupement, par toute méthode connue en soi et qui n'altère par le reste de la molécule.

La protection des différents groupements amino, alcoylamino, carboxy ou hydroxy de R peut s'effectuer par exemple comme décrit dans le brevet belge 883 416.

Par ailleurs il est entendu que, lorsque le radical R du produit de formule générale (XXII) comporte un radical hydroxy, sulfo, sulfinyle ou sulfonyle, il est préférable de mettre en œuvre un produit de formule générale (XVII) dans laquelle n = 0.

La réaction des produits de formules générales (XXII) et (XVII) s'effectue généralement en présence d'une base telle qu'une pyridine ou une base organique tertiaire de formule générale (XX). On utilise par exemple la diisopropyléthylamine ou la diéthylphénylamine.

Lorsque l'on utilise un sel du thiol de formule générale (XXII) il n'est pas nécessaire d'opérer en présence d'une base organique telle que définie ci-dessus.

On opère avantageusement dans un solvant organique tel que le diméthylformamide, le tétrahydrofuranne, le méthanol ou l'acétonitrile ou un mélange de tels solvants.

Il est également possible d'opérer en présence de bicarbonate alcalin dans un solvant tel que cité ci-dessus, éventuellement en présence d'eau. On opère à une température comprise entre —20°C et la température de reflux du mélange réactionnel, la température choisie étant variable selon le thiol employé. De même, selon le thiol employé, le temps de réaction peut varier de 5 minutes à 48 heures.

Eventuellement on opère sous azote.

Le cas échéant, la réduction de l'oxyde et l'élimination des radicaux protecteurs s'effectuent comme décrit précédemment ou comme décrit dans le brevet belge 883 416.

On prépare alors une amino-7 céphalosporine de formule générale:

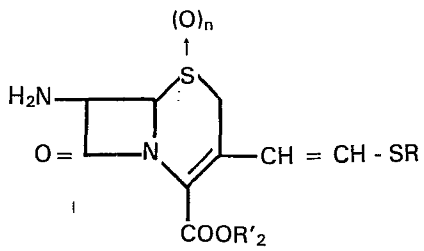

(XXVI)

dans laquelle n, $R'_2$ et R sont définis comme dans la formule générale (XXIII), par élimination du radical $(R_1)_2P(O)$- ou éventuellement élimination simultanée du radical $(R_1)_2P(O)$- et des autres radicaux protecteurs d'un produit de formule générale (XXIII).

La réaction s'effectue dans des conditions identiques à celles citées ci-dessus pour la préparation des amino-7 céphalosporines de formule générale (XXI).

Les produits de formule générale (IX) peuvent alors être préparés selon les méthodes décrites dans le brevet belge 883 416.

Les nouveaux produits selon l'invention peuvent être purifiés par des méthodes physiques telles que la chromatographie et surtout la cristallisation.

Les nouveaux produits de formule générale (I), qui sont utilisés comme intermédiaires de synthèse, trouvent un intérêt particulier dans le fait qu'ils sont cristallisables.

Les dérivés de la céphalosporine de formule générale (IX) tels que définis en $\alpha$) et leurs sels pharmaceutiquement acceptables qui sont décrits dans le brevet belge 883 416 présentent des propriétés antibactériennes particulièrement intéressantes.

Les dérivés de la céphalosporine de formule générale (IX) tels que définis en $\beta$) sont décrits, pour leur propriétés antibactériennes ou à titre d'intermédiaires pour la préparation de substances antibiotiques, dans le brevet US 4 065 620.

D'un intérêt particulier sont les produits de formule générale (I) dans laquelle les symboles $R_1$ sont des radicaux $OZ_1$ dans lesquels $Z_1$ est alcoyle ou phényle, $R_2$ est un radical protecteur choisi parmi benzhydryle, benzyle, p.nitrobenzyle, p.méthoxybenzyle ou trichloro-2,2,2 éthyle et les symboles $R_3$ et $R_4$ qui sont identiques ou différents, représentent des radicaux alcoyle, ou forment ensemble avec l'atome d'azote auquel ils sont rattachés, un hétérocycle saturé à 5 ou 6 chaînons contenant éventuellement un autre hétéroatome choisi parmi l'azote, l'oxygène ou le soufre et éventuellement substitué par un radical alcoyle;

et parmi ces produits, plus spécialement intéressants, sont les produits de formule générale (I) dans laquelle les symboles $R_1$ sont des radicaux $OZ_1$ dans lesquels $Z_1$ est alcoyle contenant 1 ou 2 atomes de carbone, ou phényle, $R_2$ est défini comme ci-dessus et, $R_3$ et $R_4$ qui sont identiques ou différents représentent des radicaux alcoyle contenant 1 ou 2 atomes de carbone ou forment ensemble avec l'atome d'azote auquel ils sont rattachés un hétérocycle saturé à 5 ou 6 chaînons;

et notamment le

— diméthoxyphosphorylamino-7 (diméthylamino-2 vinyl)-3 (méthoxy-4 benzyloxycarbonyl)-2 oxo-8 thia-5 aza-1 bicyclo[4.2.0] octène-2 isomère E

— diméthoxyphosphorylamino-7 (diméthylamino-2 vinyl)-3 (nitro-4 benzyloxycarbonyl)-2- oxo-8 thia-5 aza-1 bicyclo[4.2.0] octène-2 isomère E

— diméthoxyphosphorylamino-7 (nitro-4 benzyloxycarbonyl)-2 oxo-8 (pipéridino-2 vinyl)-3 thia-5 aza-1 bicyclo[4.2.0] octène-1 isomère E

— benzhydryloxycarbonyl-2 diéthoxyphosphorylamino-7 (diméthylamino-2 vinyl)-3 oxo-8 thia-5 aza-1 bicyclo[4.2.0] octène-2 isomère E.

Les exemples suivants, donnés à titre non limitatif, montrent comment l'invention peut être mise en pratique.

Dans ces exemples, les produits sont cités selon la nomenclature des Chemical Abstracts. Il est entendu que tous les produits selon l'invention présentent la stéréochimie donnée par la formule générale partielle

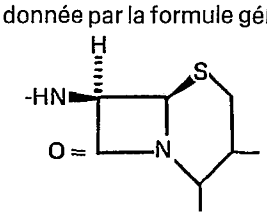

(XXV)

*Exemple 1*

A une solution de 2 g de benzyloxycarbonyl-2 diméthoxyphosphorylamino-7 méthyl-3 oxo-8 thia-5 aza-1 bicyclo[4.2.0] octène-2 dans 20 cm3 de N,N diméthylformamide à 80°C on ajoute 1,45 cm3 de bisdiméthylamino t.butoxyméthane, on agite le mélange réactionnel pendant 5 minutes à 80°C et on le dilue par 100 cm3 d'acétate d'éthyle. On lave par 4 fois 50 cm3 d'eau distillée puis 2 fois 25 cm3 de solution saturée de chlorure de sodium. La phase organique est séchée sur sulfate de magnésium, puis concentrée à sec sous pression réduite (30 mm de mercure; 4 kPa) à 30°C. On obtient 1,1 g d'un solide cristallisé brun rouge constitué principalement de benzyloxycarbonyl-2 diméthoxyphosphorylamino-7 (diméthylamino-2 vinyl)-3 oxo-8 thia-5 aza-1 bicyclo[4.2.0] octène-2 (isomère E). Ce produit peut être recristallisé dans de l'acétate d'éthyle pour donner 0,5 g de benzyloxycarbonyl-2 diméthoxyphosphorylamino-7 (diméthylamino-2 vinyl)-3 oxo-8 thia-5 aza-1 bicyclo[4.2.0] octène-2 (isomère E) pur sous la forme de cristaux jaunes (F.: 204-205°C).

Le benzyloxycarbonyl-2 diméthoxyphosphorylamino-7 méthyl-3 oxo-8 thia-5 aza-1 bicyclo[4.2.0] octène-2

peut être préparé par analogie avec la méthode décrite par A. MORIMOTO et al., J.C.S. Perkin I, 1109 (1980) par phosphorylation de l'amino-7 benzyloxycarbonyl-2 méthyl-3 oxo-8 thia-5 aza-1 bicyclo-[4.2.0] octène-2 par du chlorure de diméthoxyphosphoryle. C'est un solide cristallisé orangé, F. = 126-128°C.

L'amino-7 benzyloxycarbonyl-2 méthyl-3 oxo-8 thia-5 aza-1 bicyclo[4.2.0] octène-2 peut être préparé selon la méthode décrite dans la demande de brevet allemand 2 709 292.

*Exemple 2*

A une solution de 3,5 g de diméthoxyphosphorylamino-7 (méthoxy-4 benzyloxycarbonyl)-2 méthyl-3 oxo-8 thia-5 aza-1 bicyclo[4.2.0] octène-2 dans 35 cm3 de N,N diméthylformamide à 80°C, on ajoute 1,86 cm3 de bisdiméthylamino t.butoxyméthane, on agite le mélange réactionnel pendant 8 minutes à 80°C et on le dilue par 250 cm3 d'acétate d'éthyle et 250 cm3 d'eau distillée. La couche organique est lavée par 3 fois 200 cm3 d'eau distillée puis par 200 cm3 de solution saturée de chlorure de sodium, séchée sur sulfate de magnésium et concentrée sous pression réduite (30 mm de mercure; 4 kPa) à 30°C jusqu'à un volume résiduel de 50 cm3. Après 1 heure à 0°C on essore les cristaux, lave par de l'acétate d'éthyle (3 × 20 cm3) et par de l'éther éthylique (2 × 10 cm3) puis sèche sous 0,2 mm de mercure (27 Pa). On obtient 1,6 g de diméthoxyphosphorylamino-7 (diméthylamino-2 vinyl)-3 (méthoxy-4 benzyloxycarbonyl)-2 oxo-8 thia-5 aza-1 bicyclo-[4.2.0] octène-2 (isomère E) sous la forme d'un solide cristallisé orange, F. = 203-205°C.

Le diméthoxyphosphorylamino-7 (méthoxy-4 benzyloxycarbonyl)-2 méthyl-3 oxo-8 thia-5 aza-1 bicyclo[4.2.0] octène-2 peut être préparé par analogie avec la méthode décrite par A. MORIMOTO et al., J.C.S. Perkin I, 1109, (1980) par phosphorylation de l'amino-7 (méthoxy-4 benzyloxycarbonyl)-2 méthyl-3 oxo-8 thia-5 aza-1 bicyclo[4.2.0] octène-2 par le chlorure de diméthoxyphosphoryle. Il se présente sous la forme de cristaux blancs, F. = 137°C (acétate d'éthyle).

L'amino-7 (méthoxy-4 benzyloxycarbonyl)-2 méthyl-3 oxo-8 thia-5 aza-1 bicyclo[4.2.0] octène-2 peut être préparé selon la méthode décrite dans la demande de brevet allemand 2 243 242.

*Exemple 3*

Dans une solution de 22,9 g de diméthoxyphosphorylamino-7 méthyl-3 (nitro-4 benzyloxycarbonyl)-2 oxo-8 thia-5 aza-1 bicyclo[4.2.0] octène-2 dans 850 cm3 dacétate d'éthyle à 45°C, on ajoute 20 cm3 de bisdiméthylamino t.butoxyméthane et on agite le mélange réactionnel pendant 20 heures à 45°C puis pendant 2 heures entre 0 et 5°C. Les cristaux sont essorés, lavés par 3 fois 40 cm3 d'acétate d'éthyle, puis 3 fois 50 cm3 d'oxyde d'isopropyle et séchés. On obtient 13,3 g de diméthoxyphosphorylamino-7 (diméthylamino-2 vinyl)-3 (nitro-4 benzyloxycarbonyl)-2 oxo-8 thia-5 aza-1 bicyclo-[4.2.0] octène-2 (isomère E) sous la forme d'une poudre cristalline orangée, F. = 242-244°C. On obtient un échantillon analytiquement pur par recristallisation dans l'acétonitrile: cristaux jaunes, F. = 252-253°C.

Le diméthoxyphosphorylamino-7 méthyl-3 (nitro-4 benzyloxycarbonyl)-2 oxo-8 thia-5 aza-1 bicyclo-[4.2.0] octène-2 peut être préparé par application de la méthode décrite dans le brevet sud-africain 74 1766.

*Exemple 4*

En opérant selon le mode opératoire de l'exemple 3, mais en remplaçant le bisdiméthylamino t.butoxyméthane par 1,75 cm3 de trisdiméthylaminométhane et à partir de 2,3 g de diméthoxyphosphorylamino-7 méthyl-3 (nitro-4 benzyloxycarbonyl)-2 oxo-8 thia-5 aza-1 bicyclo-[4.2.0] octène-2, on obtient 1,5 g de diméthoxyphosphorylamino-7 (diméthylamino-2 vinyl)-3 (nitro-4 benzyloxycarbonyl)-2 oxo-8 thia-5 aza-1 bicyclo[4.2.0] octène-2 (isomère E) sous la forme d'une poudre cristalline orangée, F. = 236 bis 237°C. On obtient un échantillon analytiquement pur par recristallisation dans de l'acétonitrile: cristaux jaunes, F. = 252-253°C.

*Exemple 5*

Dans une solution de 0,9 g de diméthoxyphosphorylamino-7 méthyl-3 (nitro-4 benzyloxycarbonyl)-2 oxo-8 thia-5 aza-1 bicyclo-[4.2.0] octène-2 dans 40 cm3 d'acétate d'éthyle à 45°C, on ajoute 1,06 g de tripipéridinométhane, on agite le mélange réactionnel pendant 18 heures à 45°C et on le dilue par 20 cm3 d'acétate d'éthyle. La solution organique est lavée par 3 fois 20 cm3 d'eau distillée puis 2 fois 15 cm3 de solution saturée de chlorure de sodium, séchée sur sulfate de magnésium et concentré à sec sous pression réduite (30 mm de mercure; 4 kPa) à 30°C. Le résidu obtenu est recristallisé dans 5 cm3 d'acétate d'éthyle et on obtient 0,2 g de diméthoxyphosphoryl-amino-7 (nitro-4 benzyloxycarbonyl)-2 oxo-8 (pipéridino-2 vinyl)-3 thia-5 aza-1 bicyclo-[4.2.0] octène-2 isomère E) sous la forme d'une poudre cristalline jaune orangé, F. = 220-221°C.

*Exemple 6*

A une solution de 10 g de benzhydryloxycarbonyl-2 diéthoxyphosphorylamino-7 méthyl-3 oxo-8 thia-5 aza-1 bicyclo-[4.2.0] octène-2 dans 100 cm3 de N,N-diméthylformamide sec à 80°C on ajoute 6 cm3 de t.butoxy bisdiméthylaminométhane. Après 12 minutes à 80°C le mélange réactionnel est versé dans 400 cm3 d'acétate d'éthyle et lavé 5 fois par 250 cm3 d'eau distillée. Après séchage sur sulfate de magnésium et évaporation du solvant sous pression réduite (30 mm de mercure; 4 kPa) à 30°C on obtient 10,5 g de benzhydryloxycarbonyl-2 diéthoxyphosphorylamino-7 (diméthylamino-2 vinyl)-3 oxo-8 thia-5 aza-1 bicyclo-[4.2.0] octène-2 (isomère E) sous la forme d'un solide cristallisé orange. Ce produit est purifié par cristallisation dans 30 cm3 d'acétate d'éthyle et on obtient 5,3 g de benzhydryloxycarbonyl-2 (diméthylamino-2 vinyl)-3 diéthoxyphosphorylamino-7 oxo-8 thia-5 aza-1 bicyclo-[4.2.0] octène-2 (isomère E) sous la forme d'une poudre cristalline jaune (F. = 193-194°C).

Spectre infra-rouge ($CHBr_3$), bandes caractéristiques ($cm^{-1}$) 3370, 3320, 2800, 1760, 1680, 1610, 1530, 1230, 1010, 970, 750

Spectre RMN du proton (350 MHz, $CDCl_3$, $\delta$ en ppm, J en Hz) 1,35 et 1,40 (2T, J $\simeq$ 7, 6H, $-CH_3$); 2,90 [s, 6H, $-N(CH_3)_2$]; 3,08 et 3,18 (2D, J $\simeq$ 15, 2H, $-S-CH_2$); 3,84 (T, J $\simeq$ 10, 1H, $>\underset{\overset{\|}{O}}{P}-NH-$); 4,15 et 4,22 (2Q, J $\simeq$ 7, 4H, $-OCH_2-$); 4,81 (DT, J $\simeq$ 4,5 et 10, 1H, -H en 7); 5,08 (D, J $\simeq$ 4,5, 1H, -H en 6); 6,53 et 6,78 (2D, J $\simeq$ 14, 2H, -CH=CH-N$<$); 6,88 [s, 1H, -COO-$\underline{C}\underline{H}(C_6H_5)_2$]; 7,20 à 7,50 (Mt, 10H, aromatiques).

Le benzhydryloxycarbonyl-2 diéthoxyphosphorylamino-7 méthyl-3 oxo-8 thia-5 aza-1 bicyclo-[4.2.0] octène-2 peut être préparé selon la méthode décrite par A. Morimoto et al., J.C.S. Perkin I, 1109 (1980).

*Exemple 7*

A une suspension de 1,2 g de diéthoxyphosphorylamino-7 méthyl-3 (nitro-4 benzyloxycarbonyl)-2 oxo-8 thia-5 aza-1 bicyclo[4.2.0] octène-2 dans 10 cm3 d'acétate d'éthyle à 35°C on ajoute 0,72 cm3 de bisdiméthylamino t.butoxyméthane et on agite pendant 20 heures à 35°C puis on ajoute 0,72 cm3 de bisdiméthylamino t.butoxyméthane pour achever la réaction en agitant encore pendant 2 heures à 35°C. Le mélange réactionnel est refroidi pendant 15 minutes à l'aide d'un bain d'eau glacée. Les cristaux sont essorés et lavés par 5 fois 5 cm3 d'acétate d'éthyle et séchés. On obtient 0,8 g de diéthoxyphosphorylamino-7 (diméthylamino-2 vinyl)-3- (nitro-4 benzyloxycarbonyl)-2 oxo-8 thia-5 aza-1 bicyclo[4.2.0] octène-2 (isomère E) sous la forme d'une poudre cristalline jaune, F. = 226-227°C. On obtient un échantillon analytiquement pur par recristallisation dans de l'acétonitrile: cristaux jaunes, F. = 240-241°C.

Le diéthoxyphosphorylamino-7 méthyl-3 (nitro-4 benzyloxycarbonyl)-2 oxo-8 thia-5 aza-1 bicyclo-[4.2.0] octène-2 peut être préparé selon la méthode de M. FUKUMURA et al., Chem. Pharm. Bull., 24, 3058 (1980).

*Exemple 8*

On ajoute 0,72 cm3 de bisdiméthylamino t.butoxyméthane à une solution de 1,2 g de diéthoxyphosphorylamino-7 méthyl-3 (nitro-4 benzyloxycarbonyl)-2 oxo-8 thia-5 aza-1 bicyclo[4.2.0] octène-2 dans 7 cm3 d'acétonitrile à 55°C et on agite pendant 15 minutes à cette température. Le mélange réactionnel est refroidi par un bain glace-eau pendant 1 heure. Les cristaux formés sont essorés, lavés par 5 fois 3 cm3 d'un mélange d'acétonitrile et d'oxyde d'isopropyle (70-30 en volumes) et séchés sous pression réduite (0,2 mm de mercure; 27 Pa). On obtient 0,2 g de diéthoxyphosphorylamino-7 (diméthylamino-2 vinyl)-3 (nitro-4 benzyloxycarbonyl)-2 oxo-8 thia-5 aza-1 bicyclo[4.2.0] octène-2 (isomère E( sous la forme d'une poudre cristalline jaune, F. = 240-241°C.

*Exemple 9*

On agite à 60°C pendant 1 heure une solution de 2,02 g de diphénoxyphosphorylamino-7 méthyl-3 oxo-8 (trichloro-2,2,2 éthoxycarbonyl)-2 thia-5 aza-1 bicyclo[4.2.0] octène-2 et de 1,035 cm3 de bisdiméthylamino t.butoxyméthane dans 25 cm3 de dioxanne sec puis on dilue le mélange réactionnel par 100 cm3 d'acétate d'éthyle et 100 cm3 d'eau distillé. La phase organique est lavé par 3 fois 100 cm3 d'eau distillée puis par 100 cm3 de solution saturée de chlorure de sodium et séchée sur sulfate de magnésium. Le résidu obtenu après concentration à sec sous pression réduite (30 mm de mercure; 4 kPa) à 30°C est chromatographié sur une colonne (hauteur = 30 cm, diamètre = 2,2 cm) de gel de silice (0,04-0,06 mm) en éluant sous une pression de 0,5 bar (50 kPa) par de l'acétate d'éthyle et en recueillant des fractions de 60 cm3. Les fractions 12 à 20 contenant le produit pur sont réunis et évaporées à sec sous pression réduite (30 mm de mercure; 4 kPa) à 30°C. On obtient 1,4 g d'une meringue orangée constituée principalement de (diméthylamin-2 vinyl)-3 diphénoxyphosphorylamino-7 oxo-8 (trichloro-2,2,2 éthoxycarbonyl)-2 thia-5 aza-1 bicyclo-[4.2.0] octène-2 (isomère E) que l'on peut purifier par cristallisation dans 20 cm3 d'un mélange de chlorure de méthylène et d'éther éthylique (50-50 vol.). On obtient 0,7 g de (diméthylamino-2 vinyl)-3 diphénoxyphosphorylamino-7 oxo-8 (trichloro-2,2,2 éthoxycarbonyl)-2 thia-5 aza-1 bicyclo[4.2.0] octène-2 (isomère E) pur sous la forme de cristaux jaunes, F. = 120°C.

Le diphénoxyphosphorylamino-7 méthyl-3 oxo-8 (trichloro-2,2,2 éthoxycarbonyl)-2 thia-5 aza-1 bicyclo[4.2.0] octène-2 peut être préparé par analogie avec la méthode décrite par A. MARIMOTO et al., J.C.S. Perkin I, 1109 (1980) par phosphorylation de l'amino-7 méthyl-3 oxo-8 (trichloro-2,2,2 éthoxycarbonyl)-2 thia-5 aza-1 bicyclo[4.2.0] octène-2 par le chlorure de diphénoxyphosphoryle.

L'amino-7 méthyl-3 oxo-8 (trichloro-2,2,2 éthoxycarbonyl)-2 thia-5 aza-1 bicyclo[4.2.0] octène-2 peut être préparé selon la méthode décrite dans la demande de brevet allemand 2 243 242.

*Exemple 10*

A une solution de 2,32 g de benzhydryloxycarbonyl-2 diphénoxyphosphorylamino-7 méthyl-3 oxo-8 thia-5 aza-1 bicyclo[4.2.0] octène-2 dans 30 cm3 de N,N diméthylformamide à 80°C on ajoute 1,18 cm3 de bisdiméthylamino t.butoxyméthane, on maintient le mélange réactionnel pendant 5 minutes à 80°C et on le dilue par 150 cm3 d'acétate d'éthyle et 150 cm3 d'eau. la couche organique est lavée par 5 fois 100 cm3 d'eau distillée et par 100 cm3 de solution saturée de chlorure de sodium et séchée sur sulfate de magnésium. Le résidu obtenu après concentration à sec sous pression réduite (30 mm de mercure; 4 kPa) à 30°C est chromatographié sur une colonne (hauteur: 30 cm, diamètre: 3,4 cm) de gel de silice (0,04-0,06 mm) en éluant sous une pression de 0,5 bar (50 kPa) par un mélange de cyclohexane et d'acétate d'éthyle (50-50 en volumes) et en recuillant des fractions de 60 cm3. Les fractions 17 à 25 sont réunies et évaporées sous pression réduite (30 mm de mercure; 4 kPa) à 30°C jusqu'à un volume résiduel de 100 cm3. La solution est agitée pendant 1 heure à 10°C. Les cristaux formés sont essorés, lavées par 2 fois 30 cm3 de mélange de cyclohexane et d'acétate d'éthyle (50-50 en volumes) et séchés. On obtient 0,38 g de benzhydryloxycarbonyl-2 (diméthylamino-2 vinyl)-3 diphénoxyphosphorylamino-7 oxo-8 thia-5 aza-1 bicyclo[4.2.0] octène-2 (isomère E), F. = 226°C.

Le benzhydryloxycarbonyl-2 diphénoxyphosphorylamino-7 méthyl-3 oxo-8 thia-5 aza-1 bicyclo-[4.2.0] octène-2 peut être préparé par analogie avec la méthode décrite par A. MORIMOTO et al., J. Chem. Soc. Perkin I, 1109 (1980) par phosphorylation de l'amino-7 méthyl-3 oxo-8 thia-5 aza-1 bicyclo[4.2.0] octène-2 par le chlorure de diphénoxyphosphoryle: le produit obtenu se présente sous forme de meringue orangée.

Spectre infra-rouge (KBr), bandes caractéristiques ($cm^{-1}$) 1780, 1720, 1590, 1490, 1450, 1210, 1180, 945, 755, 700.

L'amino-7 méthyl-3 oxo-8 thia-5 aza-1 bicyclo-[4.2.0] octène-2 peut être préparé selon la méthode décrite dans la demande de brevet allemand 2 243 242.

*Exemple de reference*

Le produit de l'exemple 6 peut être utilisé comme suit:

Une suspension de 5,1 g de benzhydryloxycarbonyl-2 diéthoxyphosphorylamino-7 (diméthylamino-2 vinyl)-3 oxo-8 thia-5 aza-1 bicyclo[4.2.0] octène-2 (isomère E) dans 54 cm3 d'acétate d'éthyle est agitée pendant 1 heure et 45 minutes avec 27 cm3 d'acide chlorhydrique 1N. La phase organique est décantée et lavée par 60 cm3 de solution saturée de bicarbonate de sodium et par 60 cm3 de solution saturée de chlorure de sodium puis séchée sur sulfate de magnésium et concentrée à sec sous pression réduite (30 mm de mercure; 4 kPa) à 35°C. On obtient 4,9 g de benzhydryloxycarbonyl-2 diéthoxyphosphorylamino-7 oxo-8 (oxo-2 éthyl)-3 thia-5 aza-1 bicyclo[4.2.0] octène-2 sous la forme d'une meringue jaune.

Spectre infra-rouge ($CHBr_3$), bandes caractéristiques ($cm^{-1}$) 3380, 2730, 1780, 1720, 1490, 1245, 1020, 970, 755, 740.

Spectre de RMN du proton ($CDCl_3$, 350 MHz, $\delta$ en ppm, J en Hz) 1,34 et 1,37 [2t, J = 7, 2 × 3H, ($C\underline{H}_3$-$CH_2O)_2PO$-]; 3,22 et 3,55 (2d, J = 18, 2H, -$SCH_2$-); 3,57 et 3,61 (2d, J = 10,5, 2H, -$C\underline{H}_2CHO$); 3,67 (t, J = 10, 1H, -NH-); 4,07 à 4,23 [mt, 4H, ($CH_3$-$C\underline{H}_2O)_2PO$-]; 4,97 (d, J = 4,5, 1H, H en 6); 5,17 (dt, J = 4,5 et 10, 1H, H en 7); 6,87 (s, 1H, -$CO_2CH$<); 7,2 à 7,5 (mt, 10H aromatiques); 9,54 (s, 1H, -CHO).

On ajoute 0,38 g de chlorure de tosyle à une solution refroidie à —30°C de 1,09 g de benzhydryloxycarbonyl-2 diéthoxyphosphorylamino-7 oxo-8 (oxo-2 éthyl)-3 thia-5 aza-1 bicyclo[4.2.0] octène-2 dans 12 cm3 d'acétate d'éthyle puis on ajoute 0,27 cm3 de triéthylamine et on maintient le mélange réactionnel à —30°C pendant 7 heures puis à 20°C pendant 16 heures. On ajoute 5 cm3 d'acide chlorhydrique 1N puis lave la phase organique successivement par 5 cm3 d'eau distillée, 5 cm3 de solution saturée de chlorure de sodium puis 4 fois 5 cm3 d'eau distillé. Le résidu, obtenu après séchage sur sulfate de magnésium et évaporation à sec sous pression réduite (30 mm de mercure; 4 kPa) à 35°C, est solidifié par addition de 25 cm3 d'oxyde d'isopropyle et grattage. Le solide est essoré, lavé par 3 fois 10 cm3 d'oxyde d'isopropyle et séché sous pression réduite (0,2 mm de mercure; 27 Pa) à 20°C. On obtient 1,2 g de benzhydryloxycarbonyl-2 diéthoxyphosphorylamino-7 oxo-8 (tosyloxy-2 vinyl)-3 thia-5 aza-1 bicyclo[4.2.0] octène-2, mélange des formes E et Z (90-10 par RMN) sous la forme d'un solide de couleur crème.

Spectre infra-rouge ($CHBr_3$), bandes caractéristiques ($cm^{-1}$) 3380, 1780, 1720, 1630, 1590, 1490, 1370, 1190, 1175, 1070, 1050, 1015, 970, 755.

Spectre de RMN du proton ($CDCl_3$, 350 MHz, $\delta$ en ppm, J en Hz)

— pour la forme E:

1,3 à 1,42 [mt, 6H, ($C\underline{H}_3CH_2O)_2PO$-]; 2,46 (s, 3H, -$CH_3$ tosyle); 3,40 et 3,53 (2d, J = 18, 2H, -$SCH_2$-); 3,51 (t, J = 10,5, 1H, NH<); 4,05 à 4,25 [mt, 4H, ($CH_3C\underline{H}_2O)_2PO$-]; 4,95 (d, J = 5, 1H, H en 6); 6,88 et 6,94 (2d, J = 13, 2H, -CH = $CHOSO_2$-); 6,89 (s, 1H, -$CO_2CH$<); 7,2 à 7,50 (mt, 12H aromatiques); 7,74 (d, J = 7,5, 2H, ortho du $SO_3$ du tosyle);

— pour la forme Z (signaux caractéristiques):

2,50 (s, 3H, -$CH_3$ du tosyle); 4,99 (d, J = 5, 1H, H en 6); 6,12 et 6,43 (2d, J = 7, 2H, -CH = CH-$OSO_2$-); 6,95 (s, 1H, -$CH_2CH$<).

Une solution de 1,2 g de benzhydryloxycarbonyl-2 diéthoxyphosphorylamino-7 oxo-8 (tosyloxy-2 vinyl)-3 thia-5 aza-1 bicyclo[4.2.0] octène-2 (mélange des formes E et Z 90/10) et de 0,5 g de sel de sodium de la (diméthoxy-2,2 éthyl)-4 dioxo-5,6 thioxo-3 perhydrotriazine-1,2,4 dans 12 cm3 de N,N diméthylformamide sec est agitée pendant 3 heures à 22°C puis diluée par 100 cm3 d'acétate d'éthyle et 30 cm3 d'eau distillé. La phase organique est lavée par 4 fois 30 cm3 d'eau distillé puis séchée sur sulfate de magnésium et concentrée à sec sous pression réduite (30 mm de mercure; 4 kPa) à 35°C. Le résidu obtenu est cristallisé dans 15 cm3 d'un mélange de chlorure de méthylène et d'oxyde d'isopropyle (2-1 en volumes). Les cristaux sont essorés, lavés par 3 fois 2 cm3 de mélange (1-1 en volumes) d'oxyde d'isopropyle et de chlorure de méthylène puis 3 fois 5 cm3 d'oxyde d'isopropyle et séchés sous pression réduite (0,2 mm de mercure; 27 Pa) à 20°C. On obtient 0,6 g de benzhydryloxycarbonyl-2 {[(diméthoxy-2,2 éthyl)-4 dioxo-5,6 tétrahydro-1,4,5,6 triazine-1,2,4 yl-3] thio-2 vinyl}-3 diéthoxyphosphorylamino-7 oxo-8 thia-5 aza-1 bicyclo[4.2.0] octène-2 (forme E) sous la forme d'une poudre cristalline blanche, F. = 158-160°C.

Un mélange de 0,4 g de benzhydryloxycarbonyl-2 diéthoxyphosphorylamino-7 {[(diméthoxy-2,2 éthyl)-4 dioxo-5,6 tétrahydro-1,4,5,6 triazine-1,2,4 yl-3] thio-2 vinyl}-3 oxo-8 thia-5 aza-1 bicyclo[4.2.0] octène-2 (forme E) dans 4 cm3 d'acide orthophosphorique à 85% est agité pendant 10 heures à 20°C puis dilué par 50 cm3 d'acétate d'éthyle et agité pendant 15 minutes dans un bain d'eau glacée. Le précipité est essoré, lavé par 5 fois 10 cm3 d'acétate d'éthyle et séché sous pression réduite (0,2 mm de mercure; 27 Pa) à 20°C. On obtient 0,2 g de phosphate de l'amino-7 carboxy-2 [(dioxo-5,6 formylméthyl-4 tétrahydro-1,4,5,6 triazine-1,2,4 yl-3)

thio-2 vinyl]-3 oxo-8 thia-5 aza-1 bicyclo[4.2.0] octène-2 (forme E) sous la forme d'un solide de couleur crème.

Spectre infra-rouge ($KBr_3$), bandes caractéristiques ($cm^{-1}$) 3300-2000, 1780, 1715, 1585, 990.

A une solution refroidie à 5 °C de 3 g de phosphate d'amino-7 carboxy-2 [(dioxo-5,6 formylméthyl-4 tétrahydro-1,4,5,6 triazine-1,2,4 yl-3) thio-2 vinyl]-3 oxo-8 thia-5 aza-1 bicyclo[4.2.0] octène-2, isomère E dans 50 cm3 de diméthylacétamide, on ajoute sous agitation et goutte à goutte une solution acétonique d'anhydride p.toluènesulfonique (tritylamino-2 thiazolyl-4)-2 méthoxyimino-2 acétique, isomère syn [préparé par application de la méthode décrite par D. THEODOROPOULOS et J. GAZOPOULOS, Peptide Synthesis, I, 27, 2091 (1962) à partir de 2,72 g du sel de triéthylamine de l'ecide (tritylamino-2 thiazolyl-4)-2 méthoxyimino-2 acétique, isomère syn]. On enlève le bain réfrigérant, agite pendant 1 heure 30 minutes, dilue le mélange réactionnel par 500 cm3 d'eau et filtre. On lave le solide par 4 fois 100 cm3 d'eau et le reprend dans 100 cm3 d'acide formique, la solution est diluée par 20 cm3 d'eau et agitée pendant 10 minutes à 50 °C. On concentre à sec à 30 °C sous 0,05 mm de mercure (7 Pa), reprend par 3 fois 50 cm3 d'acétone en concentrant à chaque fois à sec puis par 50 cm3 d'acétone, on filtre, lave le solide par 3 fois 50 cm3 d'acétone à 50 °C et sèche sous vide. On recueille 2,4 g d'[(ami-no-2 thiazolyl-4)-2 méthoxyimino-2 acétamido]-7 carboxy-2 {[dioxo-5,6 formylméthyl-4 tétrahydro-1,4,5,6 triazine-1,2,4 yl-3] thio-2 vinyl}-3 oxo-8 thia-5 aza-1 bicyclo[4.2.0] octène-2, isomère syn, forme E sous la forme d'une poudre de couleur crème, identique au produit obtenu à l'exemple de référence 12, variante 1a, du brevet belge 883 416.

**Revendications pour les Etats contractants:**
BE, CH, DE, FR, GB, IT, LI, LU, NL, SE

1. Un dérivé de vinyl-3 céphalosporine caractérisé en ce qu'il répond à la formule générale:

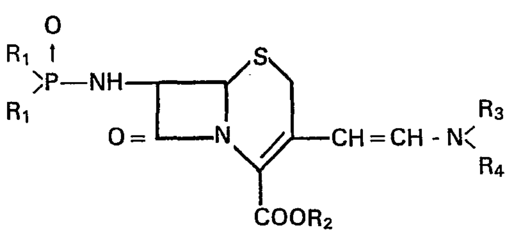

dans laquelle
les symboles $R_1$ représentent des radicaux phényle ou des radicaux $-OZ_1$ dans lesquels $Z_1$ est alcoyle, trichloro-2,2,2 éthyle, phényle ou benzyle, les radicaux phényle et benzyle pouvant être eux-mêmes substitués par un atome d'halogène ou par un radical alcoyle, alcoyloxy ou nitro, ou bien les radicaux $Z_1$ des 2 substituants $R_1$ forment ensemble un radical alcoylène contenant 2 ou 3 atomes de carbone, le symbole $R_2$ représente un radical facilement éliminable par voie enzymatique de formule générale:

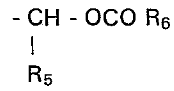

(dans laquelle $R_5$ représente un atome d'hydrogène ou un radical alcoyle et $R_6$ représente un radical alcoyle ou cyclohexyle), ou un radical protecteur, et les symboles $R_3$ et $R_4$, qui sont identiques ou différents, représentent des radicaux alcoyle (éventuellement substitués par un radical alcoyloxy ou dialcoylamino) ou phényle ou forment ensemble avec l'atome d'azote auquel ils sont rattachés un hétérocycle saturé à 5 ou 6 chaînons contenant éventuellement un autre hétéroatome choisi parmi l'azote, l'oxygène ou le soufre et éventuellement substitué par un radical alcoyle, étant entendu que les portions ou radicaux alcoyles sont droits ou ramifiés et contiennent 1 à 4 atomes de carbone, et que le substituant en position -3 du bicyclooctène présente la stéréoisomérie E.

2. Un dérivé de vinyl-3 céphalosporine selon la revendication 1, caractérisé en ce que le symbole $R_2$ représente un radical protecteur choisi parmi méthoxyméthyle, t.alcoyle contenant 4 à 6 atomes de carbone, t.alcényle contenant 6 ou 7 atomes de carbone, t.alcynyle contenant 6 ou 7 atomes de carbone, benzhydryle, benzyle, p.nitrobenzyle, p.méthoxybenzyle ou trichloro-2,2,2 éthyle.

3. Un dérivé de vinyl-3 céphalosporine selon la revendication 1, caractérisé en ce que les symboles $R_1$ représentent des radicaux $-OZ_1$ dans lesquels $Z_1$ est alcoyle ou phényle, le symbole $R_2$ est un radical protecteur choisi parmi benzhydryle, benzyle, p.nitrobenzyle, p.méthoxybenzyle ou trichloro-2,2,2 éthyle et les symboles $R_3$ et $R_4$ qui sont identiques ou différents représentent des radicaux alcoyle, ou forment ensemble avec l'atome d'azote auquel ils sont rattachés, un hétérocycle saturé à 5 ou 6 chaînons, contenant éventuellement un autre hétéroatome choisi parmi l'azote, l'oxygène ou le soufre et éventuellement substitué par un radical alcoyle, étant entendu que les portions ou radicaux alcoyles sont droits ou ramifiés et contiennent 1 à 4 atomes de carbone et que le substituant en position -3 du bicyclooctène présente la stéréoisomérie E.

4. Un dérivé de vinyl-3 céphalosporine selon la revendication 1 ou 3, caractérisé en ce que les symboles $R_1$ représentent des radicaux $-OZ_1$ dans lesquels $Z_1$ est un radical alcoyle contenant 1 ou 2 atomes de carbone, ou phényle, le symbole $R_2$ est défini comme dans la revendication 3 et les symboles $R_3$ et $R_4$ qui sont identiques ou différents représentent des radicaux alcoyle contenant 1 ou 2 atomes de carbone ou forment ensemble avec l'atome d'azote auquel ils sont rattachés un hétérocycle saturé à 5 ou 6 chaînons, et dans lesquels le substituant en position -3 du bicyclooctène présente la stéréoisomérie E.

5. Procédé de préparation d'un produit selon la revendication 1, caractérisé en ce que l'on fait agir un produit de formule générale:

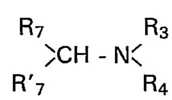

[dans laquelle $R_3$ et $R_4$ sont définis selon la reven-

dication 1 et $R_7$ et $R'_7$, qui sont identiques ou différents, soit représentent des groupements de formule générale:

$$-X_2R_8$$

dans laquelle $X_2$ est l'oxygène et $R_8$ est un radical alcoyle ou phényle, soit représentent chacun un radical amino de formule générale:

$$-N\begin{matrix}R_9\\R_{10}\end{matrix}$$

dans laquelle $R_9$ et $R_{10}$ sont définis comme $R_3$ et $R_4$, soit encore représentent l'un un radical $-X_2R_8$ (dans lequel $X_2$ est l'oxygène ou le soufre) et l'autre un radical -N $R_9R_{10}$] sur un dérivé de la céphalosporine de formule générale:

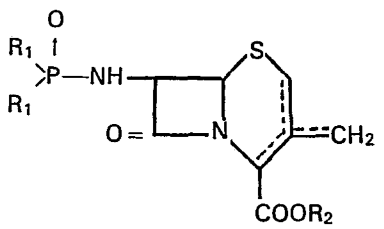

qui se présente sous forme bicyclooctène-2 ou -3 ou méthylène-3 bicyclooctane et dans laquelle $R_1$ et $R_2$ sont définis selon la revendication 1 puis on sépare éventuellement le produit obtenu en ses isomères.

6. Procédé selon la revendication 3, caractérisé en ce que l'on fait agir un produit de formule générale:

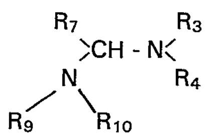

dans laquelle le radical $-NR_9R_{10}$ est le reste d'une amine plus volatile que $HNR_3R_4$.

7. Un dérivé de vinyl-3 céphalosporine selon la revendication 1, caractérisé en ce qu'il se présente à l'état cristallisé.

**Revendication pour l'Etat contractant:** AT

Procédé de préparation d'une vinyl-3 céphalosporine de formule générale:

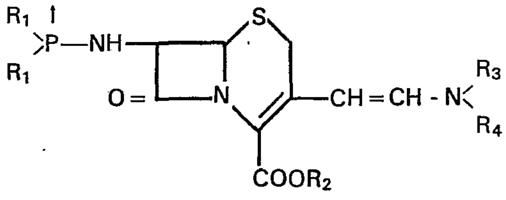

dans laquelle
les symboles $R_1$ représentent des radicaux phényle ou des radicaux $-OZ_1$ dans lesquels $Z_1$ est alcoyle, trichloro-2,2,2 éthyle, phényle ou benzyle, les radicaux phényle et benzyle pouvant être eux-mêmes substitués par un atome d'halogène ou par un radical alcoyle, alcoyloxy ou nitro, ou bien les radicaux $Z_1$ des 2 substituants $R_1$ forment ensemble un radical alcoylène contenant 2 ou 3 atomes de carbone, le symbole $R_2$ représente un radical facilement éliminable par voie enzymatique de formule générale:

$$-\underset{\displaystyle R_5}{\underset{|}{CH}}-OCO\,R_6$$

(dans laquelle $R_5$ représente un atome d'hydrogène ou un radical alcoyle et $R_6$ représente un radical alcoyle ou cyclohexyle), ou un radical protecteur, et les symboles $R_3$ et $R_4$, qui sont identiques ou différents, représentent des radicaux alcoyle (éventuellement substitués par un radical alcoyloxy ou dialcoylamino) ou phényle ou forment ensemble avec l'atome d'azote auquel ils sont rattachés un hétérocycle saturé à 5 ou 6 chaînons contenant éventuellement un autre hétéroatome choisi parmi l'azote, l'oxygène ou le soufre et éventuellement substitué par un radical alcoyle, étant entendu que les portions ou radicaux alcoyles sont droits ou ramifiés et contiennent 1 à 4 atomes de carbone, et que le substituant en position -3 du bicyclooctène présente la stéréoisomérie E, caractérisé en ce que l'on fait agir un produit de formule générale:

$$\begin{matrix}R_7\\R'_7\end{matrix}>CH-N\begin{matrix}R_3\\R_4\end{matrix}$$

[dans laquelle $R_3$ et $R_4$ sont définis comme ci-dessus et $R_7$ et $R'_7$, qui sont identiques ou différents, représentent soit des groupements de formule générale:

$$-X_2R_8$$

dans laquelle $X_2$ est l'oxygène et $R_8$ est un radical alcoyle ou phényle, soit représentent chacun un radical amino de formule générale:

$$-N\begin{matrix}R_9\\R_{10}\end{matrix}$$

dans laquelle $R_9$ et $R_{10}$ sont définis comme $R_3$ et $R_4$, soit encore représentent l'un un radical de formule $-X_2R_8$ (dans lequel $X_2$ est l'oxygène ou le soufre) et l'autre un radical -N $R_9R_{10}$] sur un dérivé de la céphalosporine de formule générale:

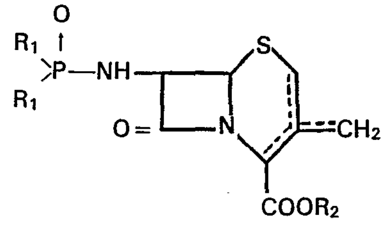

qui se présente sous forme bicyclooctène-2 ou -3 ou méthylène-3 bicyclooctane et dans laquelle $R_1$ et $R_2$

sont définis comme ci-dessus, puis on sépare éventuellement le produit obtenu en ses isomères, et éventuellement recueille le produit à l'état cristallisé.

**Patentansprüche für die Vertragsstaaten:**
BE, CH, DE, FR, GB, IT, LI, LU, NL, SE

1. Ein 3-Vinyl-cephalosporin-Derivat, dadurch gekennzeichnet, dass es der allgemeinen Formel

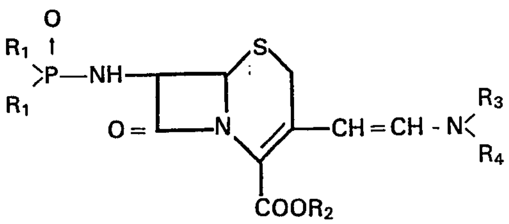

entspricht, worin die Symboe $R_1$ Phenylreste oder Reste $-OZ_1$ bedeuten, worin $Z_1$ Alkyl, 2,2,2-Trichloräthyl, Phenyl oder Benzyl ist, wobei die Phenyl- und Benzylreste ihrerseits durch ein Halogenatom oder einen Alkyl-, Alkyloxy- oder Nitrorest substituiert sein können, oder auch die Reste $Z_1$ der zwei Substituenten $R_1$ zusammen einen Alkylenrest mit 2 oder 3 Kohlenstoffatomen bilden, das Symbol $R_2$ einen auf enzymatischem Wege leicht entfernbaren Rest der allgemeinen Formel

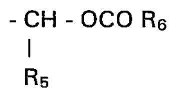

(worin $R_5$ ein Wasserstoffatom oder einen Alkylrest bedeutet und $R_6$ einen Alkyl- oder Cycloalkylrest bedeutet) oder einen Schutzrest bedeutet und die Symbole $R_3$ und $R_4$, welche identisch oder verschieden sind, Alkylreste (gegebenenfalls substituiert durch einen Alkyloxy- oder Dialkylaminorest) oder Phenylreste bedeuten oder zusammen mit dem Stickstoffatom, an das sie gebundene sind, einen gesättigten Heterocyclus mit 5 oder 6 Kettengliedern bilden, der gegebenenfalls ein anderes Heteroatom ausgewählt unter Stickstoff, Sauerstoff oder Schwefel enthält und gegebenenfalls durch einen Alkylrest substituiert ist, wobei die Alkylteile oder -reste gerade oder verzweigt sind und 1 bis 4 Kohlenstoffatome enthalten, und dass der Substituent in 3-Stellung des Bicyclooctens die E-Stereoisomerie aufweist.

2. Ein 3-Vinyl-cephalosporin-Derivat gemäss Anspruch 1, dadurch gekennzeichnet, dass das Symbol $R_2$ einen Schutzrest bedeutet ausgewählt unter Methoxymethyl, tert.-Alkyl enthaltend 4 bis 6 Kohlenstoffatome, tert.-Alkenyl enthaltend 6 oder 7 Kohlenstoffatome, tert.-Alkinyl enthaltend 6 oder 7 Kohlenstoffatome, Benzhydryl, Benzyl, p.-Nitrobenzyl, p-Methoxybenzyl oder 2,2,2-Trichlorethyl.

3. Ein 3-Vinyl-cephalosporin-Derivat gemäss Anspruch 1, dadurch gekennzeichnet, dass die Symbole $R_1$ Reste $-OZ_1$ bedeuten, worin $Z_1$ Alkyl oder Phenyl ist, das Symbol $R_2$ ein Schutzrest ist, ausgewählt unter Benzhydryl, Benzyl, p-Nitrobenzyl, p-Methoxybenzyl oder 2,2,2-Trichlorethyl und die Symbole $R_3$ und $R_4$, welche identisch oder verschieden sind, Alkylreste bedeuten oder zusammen mit dem Stickstoffatom, an das sie gebunden sind, einen gesättigten Heterocyclus mit 5 oder 6 Kettengliedern bilden, der gegebenenfalls ein anderes Heteroatom ausgewählt unter Stickstoff, Sauerstoff oder Schwefel enthält und gegebenenfalls durch einen Alkylrest substituiert ist, wobei die Alkylreste oder -teile gerade oder verzweigt sind und 1 bis 4 Kohlenstoffatome enthalten und der Substituent in 3-Stellung des Bicyclooctens die E-Stereoisomerie aufweist.

4. Ein 3-Vinyl-cephalosporin-Derivat gemäss Anspruch 1 oder 3, dadurch gekennzeichnet, dass die Symbole $R_1$ Reste $-OZ_1$ bedeuten, worin $Z_1$ ein Alkylrest mit 1 oder 2 Kohlenstoffatomen oder Phenyl ist, das Symbol $R_2$ wie in Anspruch 3 definiert ist und die Symbole $R_3$ und $R_4$, welche identisch oder verschieden sind, Alkylreste mit 1 oder 2 Kohlenstoffatomen bedeuten oder zusammen mit dem Stickstoffatom, an das sie gebunden sind, einen gesättigten Heterocyclus mit 5 oder 6 Kettengliedern bilden und worin der Substituent in 3-Stellung des Bicyclooctens die E-Stereoisomerie aufweist.

5. Verfahren zur Herstellung eines Produkts gemäss Anspruch 1, dadurch gekennzeichnet, dass man ein Produkt der allgemeinen Formel

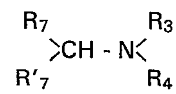

[worin $R_3$ und $R_4$ gemäss Anspruch 1 definiert sind und $R_7$ und $R'_7$, die identisch oder verschieden sind, entweder Gruppen der allgemeinen Formel

$$-X_2 R_8$$

bedeuten, worin $X_2$ Sauerstoff ist und $R_8$ ein Alkyl- oder Phenylrest ist, oder jeweils einen Aminorest der allgemeinen Formel

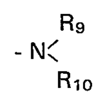

bedeuten, worin $R_9$ und $R_{10}$ wie $R_3$ und $R_4$ definiert sind oder einer bedeutet einen Rest $-X_2R_8$ (worin $X_2$ Sauerstoff oder Schwefel ist) und der andere einen Rest $-N\ R_9R_{10}$] auf ein Derivat des Cephalosporins der allgemeinen Formel

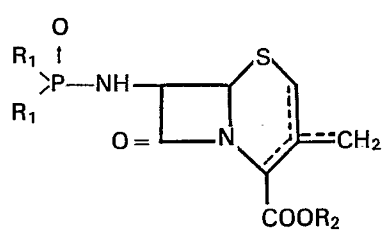

das in Bicyclooocten-2- oder -3-Form oder 3-Methylenbicyclooctan-Form vorliegt und worin $R_1$ und $R_2$ gemäss Anspruch 1, definiert sind, einwirken läss und dass man dann gegebenenfalls das erhaltene Produkt in seine Isomeren auftrennt.

6. Verfahren gemäss Anspruch 3, dadurch gekennzeichnet, dass man ein Produkt der allgemeinen Formel

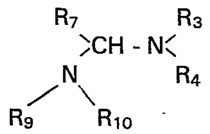

worin der Rest $-NR_9R_{10}$ der Rest eines flüchtigeren Amins ist als $HNR_3R_4$, reagieren lässt.

7. Ein 3-Vinyl-cephalosporin-Derivat gemäss Anspruch 1, dadurch gekennzeichnet, dass es in kristallisiertem Zustand vorliegt.

**Patentanspruch für den Vertragsstaat:** AT

Verfahren zur Herstellung eines 3-Vinyl-cephalosporins der allgemeinen Formel

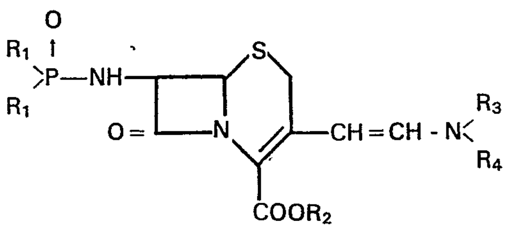

in welcher

die Symbole $R_1$ Phenylreste oder Reste $-OZ_1$, worin $Z_1$ Alkyl, 2,2,2-Trichloräthyl, Phenyl oder Benzyl ist, wobei die Phenyl- und Benzylreste selbst durch ein Halogenatom oder durch einen Alkyl-, Alkyloxy- oder Nitrorest substituiert sein können, oder auch die Reste $Z_1$ der beiden Substituenten $R_1$ zusammen einen Alkylenrest mit 2 oder 3 Kohlenstoffatomen bilden, darstellen, das Symbol $R_2$ einen auf enzymatischem Wege leicht entfernbaren Rest der allgemeinen Formel

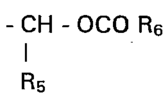

(in welcher $R_5$ ein Wasserstoffatom oder einen Alkylrest darstellt und $R_6$ für einen Alkyl- oder Cyclohexylrest steht) oder eine Schutzgruppe darstellt und die Symbole $R_3$ und $R_4$, die gleich oder voneinander verschieden sind, Alkylreste (gegebenenfalls substituiert durch einen Alkyloxy- oder Dialkylaminorest) oder Phenylreste darstellen oder zusammen mit dem Stickstoffatom, an das sie gebundene sind, einen gesättigten Heterocyclus mit 5 oder 6 Gliedern, der gegebenenfalls ein weiteres Heteroatom, ausgewählt aus Stickstoff, Sauerstoff oder Schwefel, enthält und gegebenenfalls durch einen Alkylrest substituiert ist, bilden, wobei selbstverständlich die Alkylteile oder -reste geradkettig oder verzweigt sind und 1 bis 4 Kohlenstoffatome enthalten, und der Substituent in 3-Stellung des Bicyclooctens die E-Stereoisomerie aufweist, dadurch gekennzeichnet, dass man eine Verbindung der allgemeinen Formel:

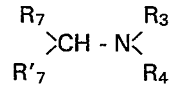

[in welcher $R_3$ und $R_4$ die obige Bedeutung haben und $R_7$ und $R'_7$, die gleich oder voneinander verschieden sind, entweder Gruppen der allgemeinen Formel

$$-X_2 R_8$$

in welcher $X_2$ Sauerstoff ist und $R_8$ ein Alkyl- oder Phenylrest ist, oder jeweils einen Aminorest der allgemeinen Formel

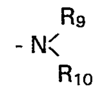

in welcher $R_9$ und $R_{10}$ die Bedeutung von $R_3$ und $R_4$ haben, darstellen oder einer einen Rest $-X_2R_8$ (worin $X_2$ Sauerstoff oder Schwefel ist) und der andere einen Rest $-N\ R_9R_{10}$ darstellt] mit einem Cephalosporinderivat der allgemeinen Formel

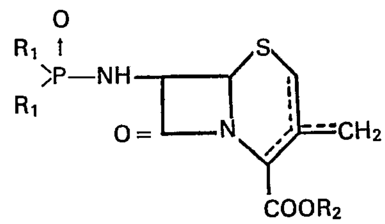

das in 2- oder 3-Bicyclooctcn-Form oder 3-Methylenbicyclooctan-Form vorliegt und in welcher Formel $R_1$ und $R_2$ die obige Bedeutung haben, umsetzt, worauf man das erhaltene Produkt gegebenenfalls in seine Isomeren spaltet und gegebenenfalls das Produkt in kristallisiertem Zustand gewinnt.

**Claims for the contracting States:**
BE, CH, DE, FR, GB, IT, LI, LU, NL, SE

1. A derivative of 3-vinylcephalosporin, characterised in that it corresponds to the general formula:

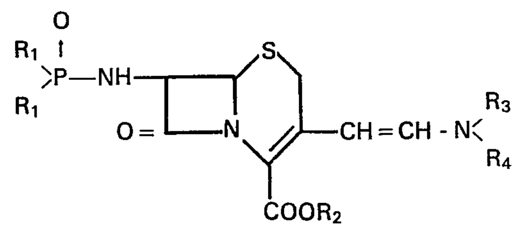

in which

the symbols $R_1$ denote phenyl radicals or radicals $-OZ_1$ in which $Z_1$ is alkyl, 2,2,2-trichloroethyl, phenyl or benzyl, the phenyl and benzyl radicals which can themselves be substituted by a halogen atom or by an alkyl, alkyloxy or nitro radical, or the radicals $Z_1$ of the 2 substituents $R_1$ form together an alkylene radical containing 2 or 3 carbon atoms, the symbol $R_2$ denotes a radical which can readily be removed via an enzymatic route of general formula:

- CH - OCO $R_6$
|
$R_5$

(in which $R_5$ denotes a hydrogen atom or an alkyl radical and $R_6$ denotes an alkyl or cyclohexyl radical), or a protective radical, and the symbols $R_3$ and $R_4$, which are identical or different, denote alkyl radicals (optionally substituted by an alkyloxy or dialkylamino radical) or phenyl radicals or form together with the nitrogen atom to which they are attached a 5 or 6-membered saturated heterocyclic ring optionally containing another heteroatom chosen from nitrogen, oxygen or sulphur and optionally substituted by an alkyl radical, it being understood that the alkyl radicals or portions are straight or branched and contain 1 to 4 carbon atoms, and that the substituent in the 3- position of the bicyclooctene has the E stereoisomerism.

2. A derivative of 3-vinylcephalosporin according to claim 1, characterised in that the symbol $R_2$ denotes a protective radical chosen from methoxymethyl, t-alkyl containing 4 to 6 carbon atoms, t-alkenyl containg 6 or 7 carbon atoms, t-alkynyl containing 6 or 7 carbon atoms, benzhydryl, benzyl, p-nitrobenzyl, p-methoxybenzyl or 2,2,2-trichloroethyl.

3. A derivative of 3-vinylcephalosporin according to claim 1, characterised in that the symbols $R_1$ denote radicals $-OZ_1$ in which $Z_1$ is alkyl or phenyl the symbol $R_2$ is a protective radical chosen from benzhydryl, benzyl, p-nitrobenzyl, p-methoxybenzyl or 2,2,2-trichloroethyl end the symbols $R_3$ and $R_4$, which are identical or different, denote alkyl radicals or form together with the nitrogen atom to which they are attached a 5 or 6-membered saturated heterocyclic ring optionally containing another heteroatom chosen from nitrogen, oxygen or sulphur and optionally substituted by an alkyl radical, it being understood that the alkyl radicals or portions are straight or branched and contain 1 to 4 carbon atoms and that the substituent in the 3- position of the bicyclooctene has the E stereoisomerism.

4. A new derivative of 3-vinylcephalosporin according to claim 1 or 3, characterised in that the symbols $R_1$ denote radicals $-OZ_1$ in which $Z_1$ is an alkyl radical containing 1 or 2 carbon atoms, or phenyl, the symbol $R_2$ is defined as in claim 3 and the symbols $R_3$ and $R_4$, which are identical or different, denote alkyl radicals containing 1 or 2 carbon atoms or form together with the nitrogen atom to which they are attached a 5 or 6-membered saturated heterocyclic ring, and in which the substituent in the 3- position of the bicyclooctene has the E stereoisomerism.

5. Process for preparing a compound according to claim 1, characterised in that a product of general formula:

$R_7$ $R_3$
>CH - N<
$R'_7$ $R_4$

[in which $R_3$ and $R_4$ are defined according to claim 1 and $R_7$ and $R'_7$, which are identical or different, either denote groups of generalformula:

$-X_2 R_8$

in which $X_2$ is oxygen and $R_8$ is an alkyl or phenyl radical, or each represent an amino radical of the general formula:

$R_9$
- N<
$R_{10}$

in which $R_9$ and $R_{10}$ are defined as $R_3$ and $R_4$, or alternatively denote one a radical $-X_2R_8$ (in which $X_2$ is oxygen or sulphur) and the other a radical $-NR_9R_{10}$] is reacted with a derivative of cephalosporin of general formula:

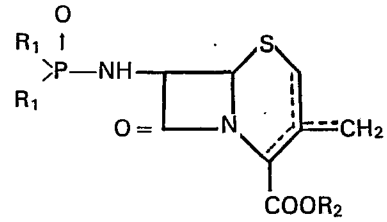

which is in the 2- or 3-bicyclooctene form or in 3-methylenebicyclooctane form and in which $R_1$ and $R_2$ are defined according to claim 1, and then the product obtained is optionally separated into its isomers.

6. Process according to claim 3, characterised in that a product of general formula:

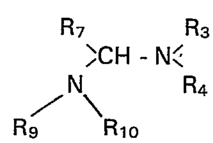

in which the radical $-NR_9R_{10}$ is the residue of an amine which is more volatile than $HNR_3R_4$, is reacted.

7. A derivative of 3-vinylcephalosporin according to claim 1, characterised in that it is in the crystalline state.

**Claim for the contracting State:** AT

Process for preparing a 3-vinylcephalosporin of general formula:

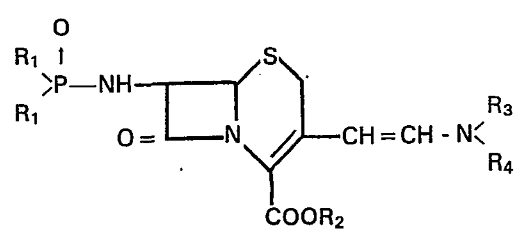

in which
the symbols $R_1$ denote phenyl radicals or radicals $-OZ_1$ in which $Z_1$ in alkyl, 2,2,2-trichloroethyl, phenyl or benzyl, the phenyl and benzyl radicals which

can themselves be substituted by a halogen atom or by an alkyl, alkyloxy or nitro radical, or the radicals $Z_1$ of the 2 substituents $R_1$ form together an alkylene radical containing 2 or 3 carbon atoms, the symbol $R_2$ denotes a radical which can readily be removed via an enzymatic route of general formula:

$$\begin{array}{l} -CH-OCO\,R_6 \\ \;\;| \\ \;\;R_5 \end{array}$$

(in which $R_5$ denotes a hydrogen atom or an alkyl radical and $R_6$ denotes an alkyl or cyclohexyl radical), or a protective radical, and the symbols $R_3$ and $R_4$, which are identical or different, denote alkyl radicals (optionally substituted by an alkyloxy or dialkylamino radical) or phenyl radicals or form together with the nitrogen atom to which they are attached a 5 or 6-membered saturated heterocyclic ring optionally containing another heteroatom chosen from nitrogen, oxygen or sulphur and optionally substituted by an alkyl radical, it being understood that the alkyl radicals or portions are straight or branched and contain 1 to 4 carbon atoms, and that the substituent in the 3- position of the bicyclooctene has the E stereoisomerism, characterised in that a product of general formula:

$$\begin{array}{ccc} R_7 & & R_3 \\ & >CH-N< & \\ R'_7 & & R_4 \end{array}$$

[in which $R_3$ and $R_4$ are defined as above and $R_7$ and $R'_7$, which are identical or different, either denote groups of general formula:

$$-X_2\,R_8$$

in which $X_2$ is oxygen and $R_8$ is an alkyl or phenyl radical, or each represent an amino radical of the general formula:

$$\begin{array}{ll} & R_9 \\ -N< & \\ & R_{10} \end{array}$$

in which $R_9$ and $R_{10}$ are defined as $R_3$ and $R_4$, or alternatively denote one a radical $-X_2R_8$ (in which $X_2$ is oxygen or sulphur) and the other a radical $-NR_9R_{10}$] is reacted with a derivative of cephalosporin of general formula:

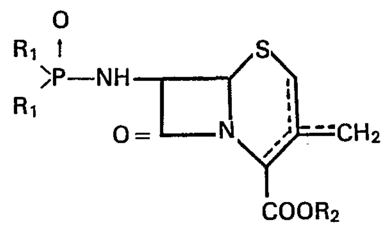

which is in the 2- or 3-bicyclooctene form or in 3-methylenebicyclooctane form and in which $R_1$ and $R_2$ are defined as above, and then the product obtained is optionally separated into its isomers, and the product is optionally collected in the crystalline state.